# EUROPÄISCHE PATENTSCHRIFT

(11) **EP 1 245 200 B1**
(45) Veröffentlichungstag und Bekanntmachung des Hinweises auf die Patenterteilung: **22.09.2004**
(21) Anmeldenummer: 02006751.8
(22) Anmeldetag: 25.03.2002
(51) Int. Cl.: A61C 19/045

(54) **Bissgabelträger mit Zentralklemmung**
Bite-fork holder with central clamp
Support de fourchette d'occlusion comportant un système de serrage central

(30) Priorität: 26.03.2001 DE 10114798
(43) Veröffentlichungstag der Anmeldung: 02.10.2002
(73) Patentinhaber: SAM Präzisionstechnik GmbH, 80637 München (DE)
(72) Erfinder: Mack, Heinz, 80637 München (DE)
(74) Vertreter: Steffens, Joachim, Dr.

(56) Entgegenhaltungen:
- DE-A- 4 037 239
- DE-U- 29 513 328

## Beschreibung

Derartige Träger mit Zentralklemmung, die seit vielen Jahren, z.B. als Halterungen für in verschiedenen Positionen zu bringende Meßeinrichtungen bekannt sind, bestehen aus Kugelgelenkeinrichtungen, die über eine zentrale Verriegellungseinrichtung miteinander verbunden sind. Die zentrale Verriegelungseinrichtung besteht ihrerseits im wesentlichen aus zwei Gehäuseteilen mit je einer darin befindlichen konisch geformten Buchse und einer zentralen Schraubverbindung, um die die beiden Gehäuseteile bei nicht fest angezogener Schraube drehbar sind. Die Gehäuseteile ihrerseits sind mit den Kugelgelenkeinrichtungen verbunden. Bei fest angezogener Schraube werden die in allen Richtungen beweglichen Kugeln der Kugelgelenke mittels der konisch geformten Buchsen über Druckbolzen, die sich in den Kugelgelenkeinrichtungen befinden, in eine feste, nicht mehr bewegliche Lage gebracht, wobei gleichzeitig auch die beiden Gehäuseteile gegeneinander fixiert werden. Auf diese Weise läßt sich der aus mehreren in verschiedenen Richtungen drehbaren Gliedern bestehende Träger von einem Ende zum anderen Ende in die jeweils gewünschte Position bringen und durch das Anziehen nur einer Schraube in einen starren Träger verwandeln, dessen Glieder in den vorher drehbaren Bereichen nicht mehr drehbar sind. Ein solcher Träger mit Zentralklemmung (14) ist in der deutschen Offenlegungsschrift DE 40 37 239 A1 beschrieben und besteht aus
(a) zentraler Verriegelungseinrichtung, die ihrerseits im wesentlichen besteht aus
   - den Gehäuseteilen (42, 46)
   - den konischen Buchsen und
   - der Schraubverbindung, die die Gehäuseteile mit den darin befindlichen konischen Buchsen verbindet,
(b) Kugelgelenkeinrichtungen, die ihrerseits im wesentlichen bestehen aus
   - Kugelpfanne
   - Druckbolzen und
   - Kugel (40) mit Kugelhals,
(c) Befestigungseinrichtung (28)für den Gesichtsbogen und
(d) Befestigungseinrichtung (56)für die Bissgabel (18), wobei beim Festschrauben der zentralen Schraubverbindung die beiden Gehäuseteile zueinander und gleichzeitig die Kugeln der Kugelgelenke mittels der konisch geformten Buchsen über Druckbolzen in eine feste Lage gebracht werden.

Dadurch, daß zur Fixierung der einzelnen drehbar zueinander angeordneten Glieder nur an einer Stelle verschraubt werden muß, hat sich ein derartiger Träger als Bissgabelträger in der Zahnarztpraxis bereits bewährt.

Als Nachteil hat sich jedoch zwischenzeitlich herausgestellt, daß sich die Schraubverbindung bei ungewollter Beanspruchung der Kugelgelenkeinrichtungen entgegen der Verschraubungsrichtung der Schraubverbindung in ungewollter Weise lösen bzw. lockern bzw. öffnen kann und damit der starr fixierte Träger im Extremfall "in sich zusammenbricht", da mit dem Öffnen der Schraubverbindung nicht nur die Fixierung der Gehäuseteile zueinander, sondern gleichzeitig auch die Fixierung der Kugelgelenke abgeschwächt bzw. ganz aufgehoben wird. Das bedeutet, daß bereits durch eine geringe Lockerung der Schraubverbindung die justierte Einstellung des Trägers in ungewollter Weise verändert werden kann.

Aus dem deutschen Gebrauchsmuster DE 295 13 328 U1, in dem eine Doppelklemme zur Verbindung zweier Stangen beschrieben ist, ist ferner ersichtlich, dass die Einführung einer Beilagscheibe die Reibung zwischen einer Schraubenmutter und einem Druckklemmteil vermindert.

Aufgabe der vorliegenden Erfindung ist es daher, die zentrale Verriegelungseinrichtung mit einer Zusatzeinrichtung zu versehen, die ein ungewolltes Öffnen der Schraubverbindung bei ungewollter Beanspruchung der Kugelgelenkeinrichtungen entgegen der Verschraubungsrichtung der Schraubverbindung verhindert.

Gelöst wurde diese Aufgabe dadurch, daß man in die zentrale Schraubverbindung eine Blockierungseinrichtung gemäß des kennzeichnenden Teils des Anspruchs integriert.

Die Blockierungseinrichtung sitzt vorzugsweise im Kopf der Schraubverbindung und wird beim Anziehen der Schraube mit Druck beaufschlagt.

Gemäß einer Ausführungsform der Erfindung besteht die Blockierungseinrichtung aus einem bekannten Axial-Zylinderrollenlager, bei dem sich in bekannter Weise die Rollen zwischen zwei Druckscheiben befinden.

Anstelle des Axial-Zylinderrollenlagers kann man aber auch ein Axial-Rillenkugellager, bei dem die Kugeln ebenfalls zwischen zwei Druckscheiben angeordnet sind, oder eine Blockierungseinrichtung einsetzen, die aus Sperrscheiben in Form von auf den Planflächen gezahnten Scheiben besteht, wobei die gezahnten Planflächen aufeinander zu liegen kommen.

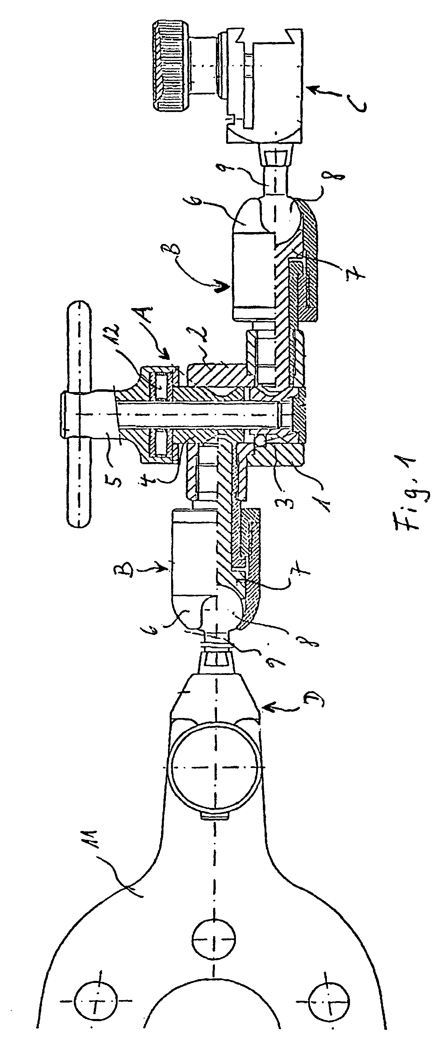

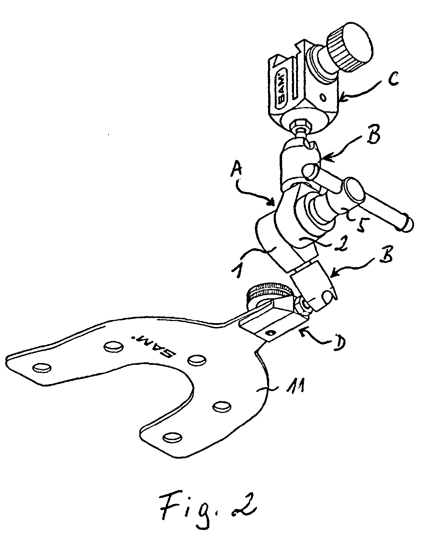

Die Erfindung wird anhand der Fig. 1 bis 3, die aufgrund der folgenden Aufstellung der Bezugszeichen ohne zusätzliche Erklärungen verständlich sind, erläutert, ohne sie jedoch darauf zu beschränken. Alle aus den Figuren ersichtlichen Details gehören mit zur erfindungsgemäßen Offenbarung.

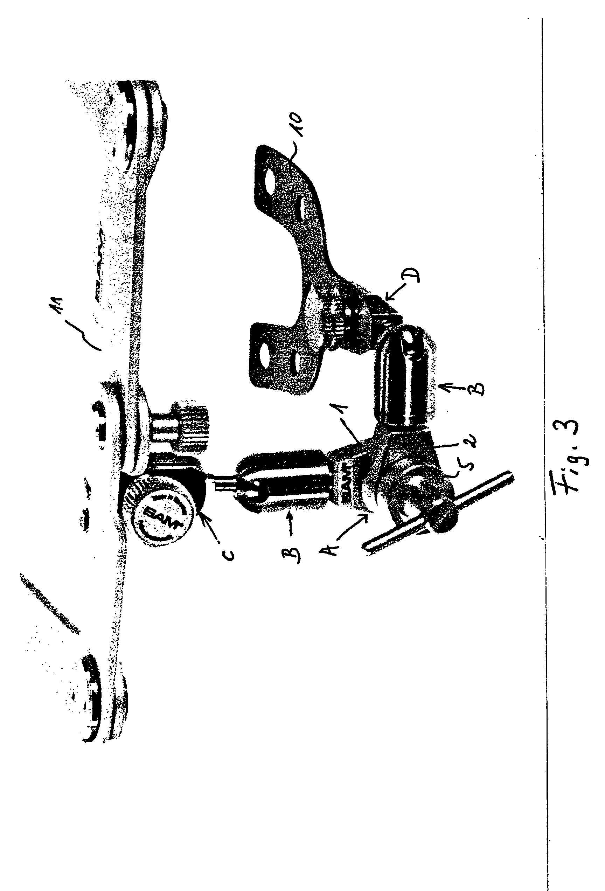

In den Fig. 1 und 3 haben die Bezugszeichen folgende Bedeutung:
- A: zentrale Verriegelungseinrichtung
- B: Kugelgelenkeinrichtungen
- C: Befestigungseinrichtung für Gesichtsbogen 10
- D: Befestigungseinrichtung für Bißgabel 11

- 1,2: Gehäuseteile
- 3,4: konische Buchsen
- 5: Schraubverbindung
- 6: Kugelpfanne
- 7: Druckbolzen
- 8: Kugel
- 9: Kugelhals
- 10: Gesichtsbogen
- 11: Bißgabel
- 12: Blockierungseinrichtung

- Fig. 1: zeigt in schematischer Darstellung, teilweise im Schnitt, den Bißgabelträger mit der im Schraubkopf integrierten Blockierungseinrichtung 12 und der an einem Ende befindlichen Bißgabel 11.
- Fig. 2: zeigt in perspektivischer Darstellung den Bißgabelträger mit Bißgabel 11.
- Fig. 3: zeigt in photographischer Darstellung den Bißgabelträger, der einerseits mit dem Gesichtsbogen 10 und andererseits mit der Bißgabel 11 verbunden ist.

## Patentansprüche

1. Bissgabelträger mit Zentralklemmung, bestehend aus
a) zentraler Verriegelungseinrichtung (A), die ihrerseits im wesentlichen besteht aus den Gehäuseteilen (1) und (2),
den konischen Buchsen (3) und (4) und
der Schraubverbindung (5), die die Gehäuseteile (1,2) mit den darin befindlichen konischen Buchsen (3, 4) verbindet,
b) Kugelgelenkeinrichtungen (B), die ihrerseits im wesentlichen bestehen aus
- Kugelpfanne (6),
- Druckbolzen (7) und
- Kugel (8) mit Kugelhals (9),
c) Befestigungseinrichtung (C) für den Gesichtsbogen (10) und
d) Befestigungseinrichtung (D) für die Bissgabel (11),
wobei beim Festschrauben der zentralen Schraubverbindung (5) die beiden Gehäuseteile (1, 2) zueinander und gleichzeitig die Kugeln (8) der Kugelgelenke mittels der konisch geformten Buchsen (3, 4) über Druckbolzen (7) in eine feste Lage gebracht werden,
**dadurch gekennzeichnet, dass**
die zentrale Schraubverbindung (5) mit einer Blockierungseinrichtung (12) versehen ist, die ein ungewolltes Öffnen der zentralen Schraubverbindung (5) bei Beanspruchung der Kugelgelenkeinrichtungen (B) entgegen der Verschraubungsrichtung der Schraubverbindung (5) verhindert und dass die Blockierungseinrichtung (12) ein Axial-Zylinderrollenlager ist, bei dem die Rollen zwischen zwei Scheiben angeordnet sind oder dass die Blockierungseinrichtung (12) ein Axial-Rillenkugellager ist, bei dem die Kugeln zwischen zwei Scheiben angeordnet sind oder dass die Blockierungseinrichtung (12) aus Sperrscheiben in Form von auf den Planflächen gezahnten Scheiben besteht, wobei die gezahnten Planflächen aufeinander liegen.

## Claims

1. Bite-fork carrier with a central clamp, comprising
a) a central locking device (A) which, for its part, essentially comprises
the housing parts (1) and (2),
the conical bushings (3) and (4) and
the screw connection (5) which connects the housing parts (1, 2) to the conical bushings (3, 4) situated in them,
b) ball-and-socket-joint devices (B) which, for their part, essentially comprise
- a ball socket (6),
- a pressure pin (7), and
- a ball (8) with a ball neck (9),
c) a fastening device (C) for the face-bow (10), and
d) a fastening device (B) for the bite fork (11),
when the central screw connection (5) is tightened, the two housing parts (1, 2) being brought into a fixed position with respect to each other and, at the same time, the balls (8) of the ball-and-socket joints being brought into a fixed position by means of the conically shaped bushings (3, 4) via pressure pins (7),
**characterized in that**
the central screw connection (5) is provided with a blocking device (12) which prevents an inadvertent opening of the central screw connection (5) when the ball-and-socket-joint devices (B) are stressed counter to the screwing direction of the screw connection (5), and **in that** the blocking device (12) is an axial cylindrical roller bearing in which the rollers are arranged between two discs, or **in that** the blocking device (12) is an axial deep groove ball bearing in which the balls are arranged between two discs, or **in that** the blocking device (12) comprises locking discs in the form of discs which are toothed on the plane faces, the toothed plane faces resting on one another.

## Revendications

1. Support de fourchette d'occlusion avec serrage central, se composant :
a) d'un dispositif de verrouillage central (A) qui se compose pour sa part essentiellement des parties de boîtier (1) et (2),
des douilles coniques (3) et (4) et
du raccord à vis (5) qui raccorde les parties de boîtier (1, 2) aux douilles coniques (3, 4) se trouvant dans celui-ci,
b) de dispositifs d'articulation sphérique (B) qui se composent pour leur part essentiellement
- de la cavité sphérique (6),
- du boulon de pression (7) et
- de la bille (8) avec un col de bille (9),
c) d'un dispositif de fixation (C) pour l'arc facial (10) et
d) d'un dispositif de fixation (D) pour la fourchette d'occlusion (11),
dans lequel, lors du vissage du raccord à vis central (5), les deux parties de boîtier (1, 2) sont rapprochées l'une vers l'autre et en même temps les billes (8) de l'articulation sphérique sont amenées dans une position fixe au moyen des douilles de forme conique (3, 4) par le biais des boulons de pression (7),
**caractérisé en ce que**
le raccord à vis central (5) est pourvu d'un dispositif de blocage (12) qui empêche une ouverture indésirable du raccord à vis central (5) en cas de sollicitation des dispositifs d'articulation sphérique (B) à l'encontre de la direction de vissage du raccord à vis (5) et **en ce que** le dispositif de blocage (12) est un palier à rouleaux cylindriques axial dans lequel les rouleaux sont disposés entre deux rondelles ou **en ce que** le dispositif de blocage (12) est un palier à billes et à rainures axial dans lequel les billes sont disposées entre deux rondelles ou **en ce que** le dispositif de blocage (12) se compose de rondelles de blocage en forme de rondelles dentées sur les surfaces planes, les surface planes dentées étant superposées.
